(19) Europäisches Patentamt
European Patent Office
Office européen des brevets

(11) **EP 4 052 943 B1**

(12) **FASCICULE DE BREVET EUROPEEN**

(45) Date de publication et mention de la délivrance du brevet:
**06.11.2024 Bulletin 2024/45**

(21) Numéro de dépôt: **22157313.2**

(22) Date de dépôt: **17.02.2022**

(51) Classification Internationale des Brevets (IPC):
**B60K 6/46** *(2007.10)* **B60K 6/442** *(2007.10)*
**B60K 6/547** *(2007.10)* **B60W 20/50** *(2016.01)*
**B60W 20/15** *(2016.01)* **B60W 50/00** *(2006.01)*
**B60K 6/36** *(2007.10)* **B60K 6/387** *(2007.10)*
**B60L 50/61** *(2019.01)* **B60W 10/06** *(2006.01)*
**B60W 10/08** *(2006.01)* **B60L 3/12** *(2006.01)*
**B60W 50/029** *(2012.01)*

(52) Classification Coopérative des Brevets (CPC):
**B60K 6/442; B60K 6/36; B60K 6/387; B60K 6/547;
B60L 3/0046; B60L 50/61; B60W 10/06;
B60W 10/08; B60W 20/50; B60W 50/0097;**
B60K 2006/4833; B60L 2240/423; B60L 2240/441;
B60L 2260/50; B60W 2050/001; (Cont.)

(54) **COMMANDE D'UN GROUPE MOTOPROPULSEUR D'UN VÉHICULE AUTOMOBILE HYBRIDE FONCTIONNANT DANS UN MODE SÉRIE À BATTERIE DÉCONNECTÉE**

STEUERUNG EINES ANTRIEBSAGGREGATS EINES HYBRIDKRAFTFAHRZEUGS, DAS IN EINEM SERIENMODUS MIT ABGEKOPPELTER BATTERIE BETRIEBEN WIRD

CONTROL OF A POWER TRAIN OF A HYBRID MOTOR VEHICLE OPERATING IN A SERIES MODE WITH BATTERY DISCONNECTED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.03.2021 FR 2102130**

(43) Date de publication de la demande:
**07.09.2022 Bulletin 2022/36**

(73) Titulaire: **Renault s.a.s**
**92100 Boulogne Billancourt (FR)**

(72) Inventeurs:
• **GHANES, Malek**
**44300 NANTES (FR)**
• **MERIENNE, Ludovic**
**91190 Gif-sur-Yvette (FR)**
• **ROUQUET, Sebastien**
**44260 Savenay (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**WO-A1-2013/076566 FR-A1- 2 783 768**
**FR-A1- 3 072 056 US-B1- 9 834 206**

(52) Classification Coopérative des Brevets (CPC):
(Cont.)
B60W 2050/0012; B60W 2050/0027;
B60W 2050/0039; B60W 2050/0295;
B60W 2710/0644; B60W 2710/0666;
B60W 2710/083; Y02T 10/62

**Description**

L'invention a trait au domaine de la commande du groupe motopropulseur d'un véhicule automobile hybride, et plus particulièrement à la commande d'un groupe motopropulseur d'un véhicule automobile hybride fonctionnant dans un mode série à batterie déconnectée.

Certains véhicules automobiles hybrides comprennent deux machines électriques, un moteur thermique et une batterie électrique haute-tension.

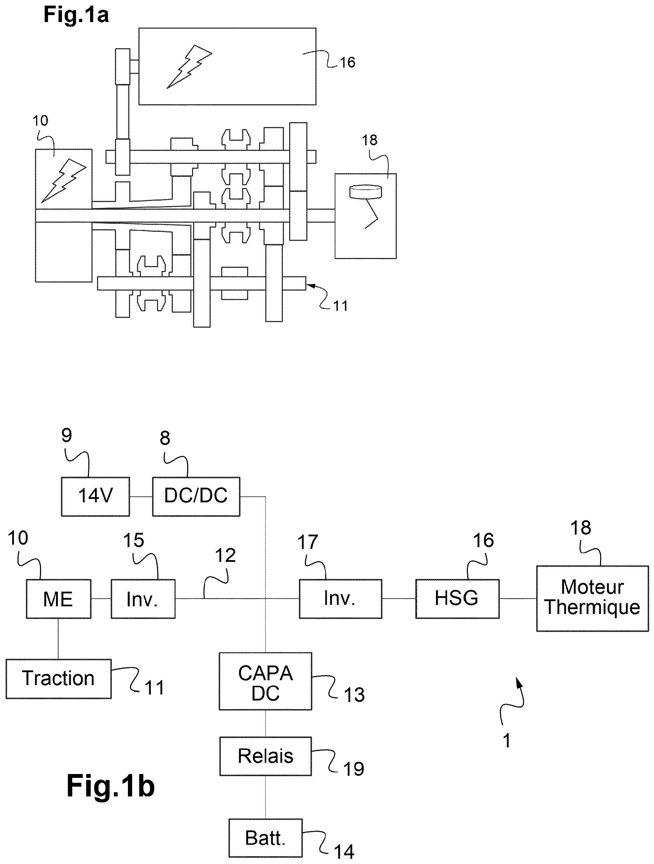

Pour de tels véhicules, tel que représenté figure 1a et 1b, il est connu qu'une première machine électrique 10, appelée machine électrique primaire, est connectée aux roues 11, tandis qu'une seconde machine électrique 16 peut être employée, soit de manière connectable aux roues via un arbre de transmission généralement lié au boîtier de vitesses, soit pour assurer une assistance électrique, moteur ou en recharge, à la première machine électrique 10. Une telle architecture est par exemple décrite dans le document FR3053299. Il est à noter que la machine électrique primaire 10 est cependant déconnectable des roues via le boîtier de vitesses par exemple en cas de défaut de la machine électrique primaire 10.

Dans de tels véhicules hybrides, plusieurs modes d'hybridation sont possibles.

On entend par mode d'hybridation les différents modes de fonctionnement du véhicule automobile pour assurer la traction et la gestion énergétique en fonction des deux machines électriques et du moteur à combustion interne.

On connaît deux familles principales d'hybridation : l'hybridation parallèle, dans laquelle les différentes sources d'énergies sont employées en parallèle pour assurer la traction, et l'hybridation série, dans laquelle le véhicule ne fonctionne que par l'énergie électrique, l'énergie thermique ne venant qu'en soutien du moteur électrique.

L'invention concerne notamment un mode particulier d'une hybridation série, mis en oeuvre notamment en cas de défaillance d'une des batteries haute tension, par exemple une batterie 400 volts, afin d'éviter une panne immobilisante. Dans ce mode, la machine électrique 10 assure seule la traction au démarrage ou à basse vitesse.

Ainsi, lorsque le véhicule est en roulage dans ce mode série particulier, la batterie est déconnectée du système via l'ouverture des relais haute-tension, ici appelés relais HV, ce qui assure la protection vis-à-vis du risque de feu.

En effet, certaines défaillances batterie impliquent l'interdiction de régénérer la batterie, en utilisant l'énergie produite par les moteurs disponibles ou l'inertie. Cette interdiction induit alors la décharge très rapide de la batterie, et une panne immobilisante pour le conducteur, puisque seule la machine électrique peut assurer le démarrage du véhicule automobile.

Un procédé de commande d'un groupe motopropulseur hybride comprenant un moteur thermique, un moteur électrique, un générateur, une batterie connectée électriquement au moteur et au générateur et une transmission placée entre le moteur électrique et un arbre de sortie accouplé à une roue motrice, lors d'une situation de roulage particulière dite « sans batterie », dans laquelle lors d'une défaillance de celle-ci, la batterie est isolée du moteur et du générateur est connu de WO 2013/076566 A1. Un procédé de commande d'un groupe motopropulseur hybride fonctionnant dans un mode série « sans batterie » permettant une régulation du régime du moteur thermique en tenant compte du retard en réponse et des capacités maximales de celui-ci est connu de FR 2 783 768 A1.

Dans l'hybridation série et parallèle, le moteur à combustion interne est désactivé en dessous d'une certaine vitesse, notamment parce que la typologie de la boîte de vitesse utilisée, généralement une boîte de vitesse automatique non-synchronisée à crabots, empêche son fonctionnement pour démarrer le véhicule. Aussi, en mode hybride parallèle, un arrêt du véhicule induira l'impossibilité de redémarrer, et en mode hybride série, un arrêt du véhicule, avec arrêt du moteur à combustion interne, induira l'impossibilité de redémarrer.

En outre une décharge du bus haute-tension relié à la batterie haute tension implique, en mode parallèle, l'arrêt de la conversion DCDC pour alimenter le réseau de bord, dit réseau 14V, et déclenche des protections des calculateurs sur ce réseau. Ceci ayant pour conséquence de bloquer le fonctionnement correct du véhicule.

Ce mode série particulier, utilisé notamment en cas de défaillance batterie, déconnecte la batterie du système de traction, pour éviter de l'endommager, et pour se protéger du risque de feu.

En outre, ce mode série déconnecte le moteur à combustion interne des roues et le fait fonctionner en régulation de vitesse.

On procède alors à la régulation de la tension de la capacité de lissage haute tension connectée au bus haute tension, par la machine électrique secondaire, via une structure connue sous le nom de *High-voltage Starter Generator*, *HSG*, en français un alterno-démarreur haute-tension, en transformant l'énergie produite par le moteur thermique 18. On parle alors fréquemment de la seconde machine électrique simplement par le terme « HSG 16 ».

Ce mode série, mis en oeuvre dans l'invention permet ainsi de continuer la traction avec la machine électrique principale, connectée aux roues, ainsi que la conversion DCDC, notamment pour alimenter le réseau électrique de bord, à partir de l'énergie disponible sur le bus haute tension dit bus DC, alimenté par la machine électrique secondaire.

On peut alors contrôler la tension du bus DC par le HSG 16 relié au moteur thermique 18, et ainsi alimenter l'autre machine électrique 10 directement, qui peut alors fournir la puissance voulue à la roue.

Toutefois dans ce mode série particulier, aussi appelé mode série batterie déconnectée, la réponse à la demande de couple $C_{ME}^*$ de l'utilisateur est contrainte par la capacité du moteur thermique à répondre à l'appel de puissance.

En effet, le moteur thermique est environ 50 fois plus lent à répondre à une demande de couple que les machines électriques.

La dynamique de supervision d'un groupe motopropulseur étant de 100Hz, on peut considérer que les machines électriques répondent immédiatement à toute demande de couple, car leur bande-passante est supérieure à 100Hz.

Toutefois, le moteur thermique n'a qu'une bande-passante de l'ordre de 4Hz ce qui le fait paraître très lent par rapport à une machine électrique.

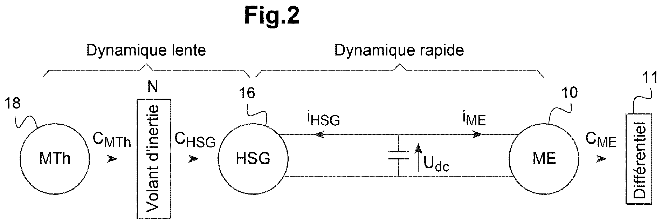

Dans le mode série batterie déconnectée, comme représenté dans la figure 2, l'énergie est apportée par le moteur thermique, convertie en énergie électrique par le *HSG* 16 puis amenée et convertie à la roue par la machine électrique 10.

La dynamique du véhicule automobile est donc directement liée à la dynamique du moteur thermique 18 comme source d'énergie.

Le problème est que le conducteur souhaite en toute circonstance disposer des capacités et de la réactivité d'un véhicule hybride électrique, qui doit donc avoir une dynamique « électrique », 50 fois plus rapide à la dynamique d'un moteur thermique.

Il existe donc le besoin d'apporter une dynamique de véhicule électrique à un système dont la seule source est celle du moteur thermique et qui ne dispose d'aucun stockage d'énergie électrique, la batterie étant déconnectée.

Aussi l'invention vise à trouver une solution au problème exposé précédemment.

A cet effet, on propose un procédé de commande d'un groupe motopropulseur hybride d'un véhicule automobile, comprenant une machine électrique primaire d'entraînement du véhicule automobile, connectée via un premier onduleur à un bus de tension continue lissé en tension par un organe d'amortissement passif, le groupe motopropulseur hybride comprenant en outre une machine électrique secondaire apte à recevoir l'énergie produite par un moteur thermique et à la transmettre audit bus de tension continue par l'intermédiaire d'un second onduleur régulant la tension dudit bus de tension continue ; et une batterie d'accumulateurs électrique connectée au bus de tension continue par un relais commandé, pour fournir une tension continue audit bus de tension continue ; le véhicule automobile comprenant un organe de commande du groupe motopropulseur adapté pour mettre en oeuvre une étape préalable au cours de laquelle on commande l'ouverture dudit relais commandé de sorte à isoler la batterie du bus de tension continue ; et le procédé étant adapté pour mettre en oeuvre les étapes suivantes :

- Une étape de prédiction de ladite vitesse de rotation du moteur thermique, après une durée prédéterminée correspondant au retard en réponse dudit moteur thermique ;
- Une étape de régulation de la vitesse de rotation du moteur thermique en fonction de ladite prédiction de ladite vitesse de rotation du moteur thermique ; et
- lorsqu'une demande de couple supérieure aux capacités en couple instantané du moteur thermique est réalisée par un utilisateur, on procède alors à :
- Une étape de comparaison entre une vitesse de rotation cible du moteur thermique et ladite vitesse de rotation prédite ;
- Tant que ladite vitesse de rotation prédite est inférieure à ladite vitesse de rotation cible, on procède à la commande d'un couple cible de la machine électrique primaire nul et à la commande d'un couple cible du moteur thermique correspondant à la valeur maximale de couple dudit moteur thermique ; et
- Lorsque ladite vitesse de rotation prédite est supérieure ou égale à ladite vitesse de rotation cible, on procède à la commande d'un couple cible de la machine électrique primaire égal au couple demandé par l'utilisateur tandis que le couple du moteur thermique est librement régulé par ladite étape de régulation.

Ainsi on obtient un procédé permettant de fournir à un véhicule hybride fonctionnant en mode série à batterie déconnectée, une dynamique rapide, proche de celle d'un véhicule tout électrique, lorsqu'un utilisateur effectue une demande franche en couple.

Avantageusement, on procède par ailleurs à la régulation de la tension du bus continue en fonction d'un couple cible de la machine électrique primaire, du couple cible de la machine électrique secondaire et d'une valeur de tension cible. Ceci permet de fournir une régulation optimisée pour obtenir la dynamique la plus performante suite à la demande de couple de l'utilisateur.

En particulier, ladite étape de régulation de la vitesse de rotation du moteur thermique est en outre réalisée en fonction d'une valeur de vitesse de rotation de référence.

L'invention concerne aussi un organe de commande d'un groupe motopropulseur hybride d'un véhicule automobile, comprenant une machine électrique primaire d'entraînement du véhicule automobile, connectée via un premier onduleur à un bus de tension continue lissé en tension par un organe d'amortissement passif,

le groupe motopropulseur hybride comprenant en outre une machine électrique secondaire apte à recevoir l'énergie produite par un moteur thermique et à la transmettre audit bus de tension continue par l'intermédiaire d'un second onduleur régulant la tension dudit bus de tension continue ; et une batterie d'accumulateurs électrique connectée au bus de tension continue par un relais commandé, pour fournir une tension continue audit bus de tension continue ; ledit organe de commande comprenant des moyens pour mettre en oeuvre une étape préalable au cours de laquelle on commande l'ouverture dudit relais commandé de sorte à isoler la batterie du bus de tension continue ; et ledit organe de commande comprenant des moyens pour mettre en oeuvre les étapes suivantes :

- Une étape de prédiction de ladite vitesse de rotation du moteur thermique, après une durée prédéterminée correspondant au retard en réponse dudit moteur thermique ;
- Une étape de régulation de la vitesse de rotation du moteur thermique en fonction de ladite prédiction de ladite vitesse de rotation du moteur thermique ; et
- lorsqu'une demande de couple supérieure aux capacités en couple instantané du moteur thermique est réalisée par un utilisateur on procède alors à :
- Une étape de comparaison entre une vitesse de rotation cible du moteur thermique et ladite vitesse de rotation prédite ;
- Tant que ladite vitesse de rotation prédite est inférieure à ladite vitesse de rotation cible, on procède à la commande d'un couple cible de la machine électrique primaire nul et à la commande d'un couple cible du moteur thermique correspondant à la valeur maximale de couple dudit moteur thermique ; et
- Lorsque ladite vitesse de rotation prédite est supérieure ou égale à ladite vitesse de rotation cible, on procède à la commande d'un couple cible de la machine électrique primaire égal au couple demandé par l'utilisateur tandis que le couple du moteur thermique est librement régulé par ladite étape de régulation.

L'invention concerne aussi un véhicule automobile comprenant un groupe motopropulseur hybride d'un véhicule automobile, comprenant une machine électrique primaire d'entraînement du véhicule automobile, connectée via un premier onduleur à un bus de tension continue lissé en tension par un organe d'amortissement passif, le groupe motopropulseur hybride comprenant en outre une machine électrique secondaire apte à recevoir l'énergie produite par un moteur thermique et à la transmettre audit bus de tension continue par l'intermédiaire d'un second onduleur régulant la tension dudit bus de tension continue ; et une batterie d'accumulateurs électrique connectée au bus de tension continue par un relais commandé, pour fournir une tension continue audit bus de tension continue ; le véhicule automobile comprenant un organe de commande du groupe motopropulseur tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

[Fig. 1a] est une vue schématique d'un groupe motopropulseur d'un véhicule automobile hybride selon l'invention :
[Fig. 1b] est une vue d'un schéma électrique du groupe motopropulseur d'un véhicule automobile hybride selon l'invention ;
[Fig. 2] est une vue schématique représentant la dynamique des éléments constituant le groupe motopropulseur selon l'invention ;
[Fig. 3] est un schéma de la régulation du groupe motopropulseur selon le mode de réalisation de l'invention ;
[Fig. 4] est une vue schématique de la dynamique d'un moteur thermique d'un véhicule automobile hybride selon l'invention ; et
[Fig. 5] est une vue représentant des graphiques de résultats d'essais simulés du procédé selon l'invention.

En référence à la figure 1b, un véhicule automobile comprend un groupe motopropulseur hybride 1.

Le groupe motopropulseur 1, abrégé GMP 1 comprend d'une part un moteur à combustion interne 18, aussi appelé moteur thermique 18, et deux machines électriques 10, 16.

Dans un mode d'hybridation du GMP 1, mis en oeuvre dans l'invention, une première machine électrique 10 est en prise avec les organes 11 d'entraînement du véhicule automobile.

Cette première machine électrique 10 est associée à un premier onduleur 15 recevant une tension continue d'un bus de tension continue 12.

Ce bus de tension continue 12 est régulé en tension par un organe de régulation de tension 13, ici un ensemble actif dit de capacité DC 13.

Le bus de tension continue 12, aussi abrégé bus DC 12 est aussi connecté à une seconde machine électrique 16, par l'intermédiaire d'un second onduleur 17.

Cette seconde machine électrique 16, est elle-même connectée au moteur thermique 18. Ainsi, la seconde machine électrique 16 est apte à convertir l'énergie produite par le moteur thermique 18 en une tension pouvant être transmise sur le bus DC 12.

Le bus DC 12 est aussi connecté à une batterie d'accumulateurs électriques haute-tension 14, généralement d'une tension de sensiblement 400V, via un relais 19 de protection commandé.

De plus le bus DC 12 est connecté au réseau de bord 9 du véhicule automobile, aussi appelé réseau 14 V par l'intermédiaire d'un convertisseur continu-continu 8, abrégé DC/DC 8.

Selon l'architecture ainsi décrite du mode série, seule la première machine électrique 10 peut entraîner en mouvement le véhicule automobile.

Cette première machine électrique est alimentée soit par la batterie 14 soit par l'énergie électrique transmise par la seconde machine électrique, par transformation de l'énergie produite par le moteur thermique 18.

Or comme il a été exposé précédemment, et en référence à la figure 2, lorsque l'utilisateur effectue un appel franc de couple dans ce mode série, à batterie isolée, la dynamique lente du moteur thermique 18 crée un retard insatisfaisant pour l'utilisateur, qui attendrait une dynamique rapide comme le permet une machine électrique 10.

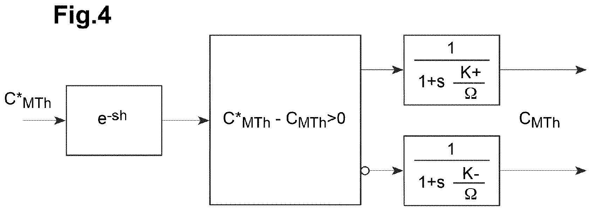

Le moteur thermique peut être modélisé en référence à la figure 4, par une fonction de transfert comportant un retard $e^{-sh}$, avec s la variable de Laplace et h la valeur temporelle du retard, multiplié par un filtre de premier ordre, déterminé en fonction de la valeur de la différence :

Si :

$$C_{MTh}^* - C_{MTh} > 0$$

Alors :

$$\frac{1}{1 + s\dfrac{K_+}{\Omega}}$$

Sinon :

$$\frac{1}{1 + s\dfrac{K_-}{\Omega}}$$

Dans lesquels :

$C_{MTh}^*$ est la commande en couple du moteur thermique

$C_{MTh}$ est le couple du moteur thermique

$\Omega$ est la vitesse de rotation du moteur thermique (en radis)

Et les constantes suivantes :

$$K^+ = \frac{5 * 2\Pi}{\Omega}$$

$$K^- = \frac{20 * 2\Pi}{\Omega}$$

$$h = \frac{2 * 2\Pi}{\Omega}$$

La valeur h étant la valeur temporelle du retard du moteur thermique 18.

L'invention vise alors à positionner le système dans un état où l'on peut venir puiser dans deux réserves d'énergie :

- L'inertie du moteur thermique 18 et

- L'énergie de la capacité du bus DC 13 qui a pour but de stabiliser la tension du bus.

En effet, lors d'un appel franc en couple par un utilisateur du véhicule, alors que le véhicule est en mode série à batterie déconnectée, on dispose de deux degrés de liberté : la vitesse de rotation du volant d'inertie du moteur thermique 18 et la tension de bus $U_{DC}$.

Ainsi, on positionne le système dans un état favorable à la réalisation de puissance via les consignes suivantes : couple de référence pour le moteur thermique 18, HSG 16 et machine électrique 10.

Dès lors, le problème technique est de trouver une stratégie pour réaliser une demande franche de couple de traction avec une dynamique électrique en limitant l'effet de la dynamique lente du moteur thermique 18.

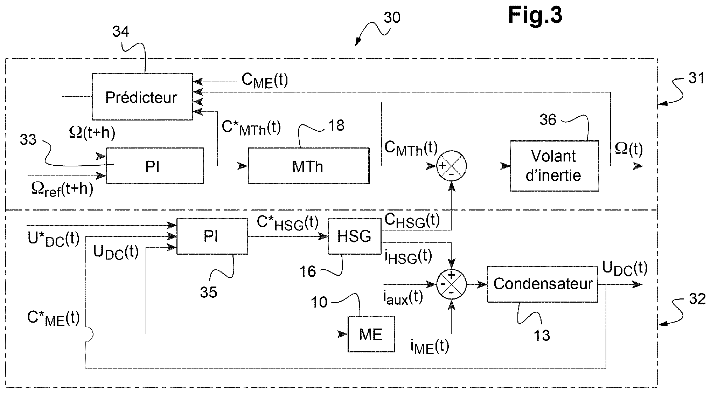

A cet effet, on met en oeuvre des étapes de régulation 32 de la tension du bus continu $U_{DC}$ et de régulation 31 de la vitesse de rotation $\Omega$ de la machine thermique 18, en référence à la figure 3.

Ces étapes de régulation 31,32 sont représentées figure 3 sous la forme d'un schéma de régulation 30.

Une première partie de régulation 31 comprend un module dit « prédicteur » 34 qui estime la vitesse de rotation $\Omega$(t + h) à l'instant t+h en fonction d'une valeur de couple cible $C^*_{ME(t)}$ de la machine électrique 10, de la vitesse de rotation $\Omega(t)$, de la valeur de couple cible du moteur thermique C*$_{MTh}$, du couple $C_{MTh}(t)$ fourni par le moteur thermique 18 à l'instant t et d'une valeur $\Omega_{ref}$(t+h).

$\Omega_{ref}$(t+h) correspond à la vitesse cible à laquelle on va produire la demande utilisateur. Cette valeur provient d'une autre stratégie qui choisit la vitesse cible en prenant en compte notamment les saturations du HSG 16, du moteur thermique 18 et éventuellement des paramètres supplémentaires.

Une régulation Proportionnelle-Intégrale 33, dit régulation PI 33, est alors mis en oeuvre pour réguler la machine thermique à la valeur de couple cible $C^*_{MTh}(t)$ en fonction de la valeur anticipée estimée de la vitesse de rotation $\Omega(t + h)$ du moteur thermique 18 et d'une valeur de vitesse de rotation de référence $\Omega_{ref}(t + h)$ à $t + h$. La valeur h étant la valeur temporelle du retard du moteur thermique 18.

En outre une deuxième partie de régulation 32 permet de réguler la tension du bus $U_{DC}(t)$, ici selon un exemple de mise en oeuvre non limitatif, en fonction d'une tension cible $U^*_{DC}(t)$, de la tension du bus $U_{DC}(t)$ et du couple cible de la machine électrique $C^*_{ME}(t)$, par un autre régulateur PI 35.

La régulation générale étant alors acquise par l'équation suivante :

$$X(t + h) = e^{Ah}X(t) + \int_0^h e^{A(h-s)}Bu(s + t - h)ds + \int_0^h e^{A(h-s)}d(s + t)ds$$

Dans laquelle :

$$X(t) = \begin{bmatrix} \Omega(t) \\ C_{MTh}(t) \end{bmatrix}$$

$$u(t) = C^*_{MTh}(t)$$

$$A = \begin{bmatrix} 0 & -1/J \\ 0 & -\Omega(t)/K \end{bmatrix}$$

$$B = \begin{bmatrix} 0 \\ \Omega(t)/K \end{bmatrix}$$

$$d(t) = \begin{bmatrix} -C_{HSG}(t)/J \\ 0 \end{bmatrix}$$

J étant l'inertie obtenue par la somme du volant d'inertie 36 du moteur thermique 18 et de l'inertie du HSG 16.

K la moyenne simple entre K+ et K- définis précédemment.

Partant de cette régulation, lorsqu'un appel franc de couple est demandé par l'utilisateur du véhicule automobile, le procédé met en oeuvre les étapes suivantes :

Tant que $\Omega(t + h) < \Omega^*$ alors le couple cible de la machine électrique reste nul, $C^*_{ME} = 0$, mais le couple du moteur thermique est demandé à sa capacité maximale, soit $C^*_{MTh}(t) = C^*_{MThmax}$.

Sinon, le couple demandé à la machine électrique est celui demandé par l'utilisateur : $C^*_{ME}(t - h) = C_{demand}$ et le couple du moteur thermique reste celui obtenu par la régulation de la vitesse de rotation soit $C^*_{MTh}(t)$ régulation de $\Omega$. Le fait ici de calculer ce couple à t-h permet de rendre le calcul de prédiction plus simple.

Ainsi, tant que la vitesse de rotation prédite $\Omega(t + h)$ est inférieure à la vitesse cible $\Omega^*$, la boucle de régulation en vitesse est ouverte et on demande au moteur thermique 18 le couple maximum qu'il est capable de délivrer indépendamment de la volonté du conducteur.

On va alors surcharger le moteur thermique dont le régime va fortement augmenter. Avec l'augmentation de régime, on va stocker de l'énergie dans le volant d'inertie et arrivé à un certain niveau, on va réaliser l'appel de couple avec la machine électrique 10.

L'idée étant ici de retarder la demande utilisateur $C_{demand}$ afin de laisser le temps au moteur thermique de monter en régime et en couple, jusqu'au moment où on pourra réaliser la demande utilisateur sans faire caler le moteur thermique 18.

Il existe alors un régime cible $\Omega^*$, dépendant du couple demandé $C_{demand}$ et du régime initial, permettant de minimiser le temps de réponse du système (temps d'ouverture de la boucle de régulation).

Ce régime cible $\Omega^*$ peut être calculé à l'aide de méthodes itératives ou en recherchant une solution comme un problème d'optimisation.

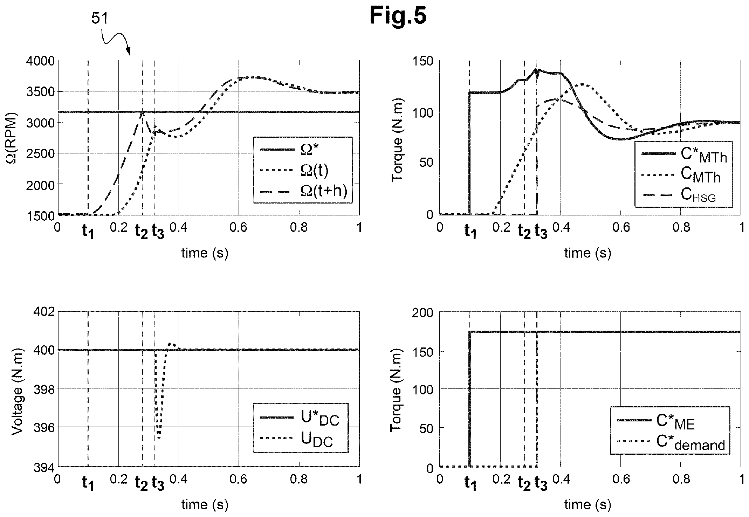

En référence à la figure 5, qui est une représentation d'une simulation effectuée où un appel de couple $C_{demand}$ est demandé à l'instant t1=0. 1s.

Le moteur thermique reçoit une consigne à couple maximal $C^*_{MThmax}$ jusqu'au moment $t_2$ où le volant d'inertie a stocké suffisamment d'énergie pour réaliser l'appel franc de couple à l'instant $t_3$.

Dans le chronogramme 51, on peut voir une première augmentation du régime $\Omega$ du moteur thermique, c'est la phase de surcharge moteur, entre t1 et t3. Ensuite on observe une inflexion après t3, le régime diminuant, c'est la phase de prélèvement d'énergie cinétique.

Enfin le régime augmente à nouveau, le couple du moteur thermique 18 étant suffisamment élevé pour alimenter en énergie le HSG 16 et la machine électrique 18 qui suit.

Ainsi, même si l'on ne peut éliminer le retard du moteur thermique 18, l'invention permet de réduire le ressenti de ce retard et permet d'obtenir une dynamique franche, proche de celle d'une machine électrique 10 reliée à la batterie 14.

Le conducteur bénéficie ainsi donc du gain de puissance accordé par la déconnection de la batterie 14 sans subir la conséquence de perte de dynamique.

## Revendications

1. Procédé de commande d'un groupe motopropulseur hybride (1) d'un véhicule automobile, comprenant une machine électrique primaire (10) d'entraînement du véhicule automobile, connectée via un premier onduleur (15) à un bus de tension continue (12) lissé en tension par un organe d'amortissement passif (13),

   le groupe motopropulseur hybride (1) comprenant en outre une machine électrique secondaire (16) apte à recevoir l'énergie produite par un moteur thermique (18) et à la transmettre audit bus de tension continue (12) par l'intermédiaire d'un second onduleur (17) régulant la tension dudit bus de tension continue (12) ; et une batterie d'accumulateurs électrique (14) connectée au bus de tension continue (12) par un relais commandé (19), pour fournir une tension continue ($V_{DC}$) audit bus de tension continue (12) ; le véhicule automobile comprenant un organe de commande du groupe motopropulseur (1) adapté pour mettre en oeuvre une étape préalable au cours de laquelle on commande l'ouverture dudit relais commandé (19) de sorte à isoler la batterie (14) du bus de tension continue (12) ; et le procédé étant adapté pour mettre en oeuvre les étapes suivantes :

   - Une étape de prédiction (34) de ladite vitesse de rotation ($\Omega(t + h)$) du moteur thermique (18), après une durée de prédéterminée (h) correspondant au retard en réponse dudit moteur thermique (18) ;
- Une étape de régulation (33) de la vitesse de rotation ($\Omega(t)$) du moteur thermique (18) en fonction de ladite prédiction de ladite vitesse de rotation ($\Omega(t + h)$) du moteur thermique (18) ; et

lorsqu'une demande de couple ($C_{demand}$) supérieure aux capacités en couple instantané du moteur thermique (18) est réalisée par un utilisateur on procède alors à :

- Une étape de comparaison entre une vitesse de rotation cible ($\Omega^*$) du moteur thermique (18) et ladite vitesse de rotation prédite ($\Omega(t + h)$) ;
- Tant que ladite vitesse de rotation prédite ($\Omega(t + h)$) est inférieure à ladite vitesse de rotation cible ($\Omega^*$), on procède à la commande d'un couple cible ($C_{ME}^*$) de la machine électrique primaire (10) nul et à la commande d'un couple cible ($C_{MTh}^*(t)$) du moteur thermique (18) correspondant à la valeur maximale ($C_{MThmax}^*$) de couple dudit moteur thermique (18) ; et
- Lorsque ladite vitesse de rotation prédite ($\Omega(t + h)$) est supérieure ou égale à ladite vitesse de rotation cible ($\Omega^*$), on procède à la commande d'un couple cible ($C_{ME}^*$) de la machine électrique primaire (10) égal au couple demandé ($C_{demand}$) par l'utilisateur tandis que le couple du moteur thermique (18) est librement régulé par ladite étape de régulation (33).

2. Procédé selon la revendication 1 dans laquelle on procède par ailleurs à la régulation de la tension du bus continue ($U_{DC}$) en fonction d'un couple cible ($C_{ME}^*(t)$) de la machine électrique primaire (10), du couple cible ($C_{HSG}^*(t)$) de la machine électrique secondaire (16) et d'une valeur de tension cible ($U_{DC}^*(t)$).

3. Procédé selon la revendication 1 ou 2, **caractérisé en ce que** ladite étape de régulation (33) de la vitesse de rotation $\Omega(t)$ du moteur thermique (18) est en outre réalisée en fonction d'une valeur de vitesse de rotation de référence ($\Omega_{ref}(t + h)$).

4. Organe de commande d'un groupe motopropulseur hybride (1) d'un véhicule automobile, comprenant une machine électrique primaire (10) d'entraînement du véhicule automobile, connectée via un premier onduleur (15) à un bus de tension continue (12) lissé en tension par un organe d'amortissement passif (13),

le groupe motopropulseur hybride (1) comprenant en outre une machine électrique secondaire (16) apte à recevoir l'énergie produite par un moteur thermique (18) et à la transmettre audit bus de tension continue (12) par l'intermédiaire d'un second onduleur (17) régulant la tension dudit bus de tension continue (12) ; et une batterie d'accumulateurs électrique (14) connectée au bus de tension continue (12) par un relais commandé (19), pour fournir une tension continue ($V_{DC}$) audit bus de tension continue (12) ;
ledit organe de commande comprenant des moyens pour mettre en oeuvre une étape préalable au cours de laquelle on commande l'ouverture dudit relais commandé (19) de sorte à isoler la batterie (14) du bus de tension continue (12) ; et
ledit organe de commande comprenant des moyens pour mettre en oeuvre les étapes suivantes :

- Une étape de prédiction (34) de ladite vitesse de rotation ($\Omega(t + h)$) du moteur thermique (18), après une durée de prédéterminée (h) correspondant au retard en réponse dudit moteur thermique (18) ;
- Une étape de régulation (33) de la vitesse de rotation $\Omega(t)$ du moteur thermique (18) en fonction de ladite prédiction de ladite vitesse de rotation ($\Omega(t + h)$) du moteur thermique (18) ;

de sorte que lorsqu'une demande de couple ($C_{demand}$) supérieure aux capacités en couple instantané du moteur thermique (18) est réalisée par un utilisateur, l'organe de commande met en oeuvre :

- Une étape de comparaison entre une vitesse de rotation cible ($\Omega^*$) du moteur thermique (18) et ladite vitesse de rotation prédite ($\Omega(t + h)$) ;

- Tant que ladite vitesse de rotation prédite ($\Omega(t + h)$) est inférieure à ladite vitesse de rotation cible ($\Omega^*$), on procède à la commande d'un couple cible ( $C_{ME}^*$ ) de la machine électrique primaire (10) nul et à la commande d'un couple cible ( $C_{MTh}^*(t)$ ) du moteur thermique (18) correspondant à la valeur maximale ( $C_{MThmax}^*$ ) de couple dudit moteur thermique (18) ; et

- Lorsque ladite vitesse de rotation prédite ($\Omega(t + h)$) est supérieure ou égale à ladite vitesse de rotation cible ($\Omega^*$), on procède à la commande d'un couple cible ( $C_{ME}^*$ ) de la machine électrique primaire (10) égal au couple demandé ($C_{demand}$) par l'utilisateur tandis que le couple du moteur thermique (18) est librement régulé par ladite étape de régulation (33).

**5.** Véhicule automobile comprenant un groupe motopropulseur hybride (1) d'un véhicule automobile, comprenant une machine électrique primaire (10) d'entraînement du véhicule automobile, connectée via un premier onduleur (15) à un bus de tension continue (12) lissé en tension par un organe d'amortissement passif (13), le groupe motopropulseur hybride (1) comprenant en outre une machine électrique secondaire (16) apte à recevoir l'énergie produite par un moteur thermique (18) et à la transmettre audit bus de tension continue (12) par l'intermédiaire d'un second onduleur (17) régulant la tension dudit bus de tension continue (12) ; et une batterie d'accumulateurs électrique (14) connectée au bus de tension continue (12) par un relais commandé (19), pour fournir une tension continue (VDC) audit bus de tension continue (12) ; le véhicule automobile comprenant un organe de commande du groupe motopropulseur (1) selon la revendication 4.

**Patentansprüche**

**1.** Verfahren zum Steuern eines Hybridantriebsstrangs (1) eines Kraftfahrzeugs, umfassend eine primäre Elektromaschine (10) zum Antreiben des Kraftfahrzeugs, die über einen ersten Wechselrichter (15) an einen Gleichspannungsbus (12) angeschlossen ist, dessen Spannung durch ein passives Dämpfungselement (13) geglättet wird,

der Hybridantriebsstrang (1) umfassend ferner eine sekundäre Elektromaschine (16), die geeignet ist, um die Energie aufzunehmen, die durch eine Wärmekraftmaschine (18) produziert wird, und sie über einen zweiten Wechselrichter (17), der die Spannung des Gleichspannungsbusses (12) regelt, an den Gleichspannungsbus (12) zu übertragen; und eine elektrische Akkumulatorenbatterie (14), die durch ein gesteuertes Relais (19) an den Gleichspannungsbus (12) angeschlossen ist, zum Bereitstellen einer Gleichspannung ($V_{DC}$) an den Gleichspannungsbus (12); das Kraftfahrzeug umfassend ein Steuerelement des Antriebsstrangs (1), das zum Implementieren eines vorangehendes Schrittes angepasst ist, im Laufe dessen das Öffnen des gesteuerten Relais (19) gesteuert wird, um die Batterie (14) von dem Spannungsbus (12) zu isolieren; und wobei das Verfahren zum Implementieren der folgenden Schritte angepasst ist:

- einen Schritt zum Vorhersagen (34) der Drehzahl ($\Omega(t + h)$) der Wärmekraftmaschine (18) nach einer zuvor bestimmten Dauer ($h$), die der Verzögerung einer Reaktion der Wärmekraftmaschine (18) entspricht;
- einen Schritt zum Regeln (33) der Drehzahl ($\Omega(t)$) der Wärmekraftmaschine (18) in Abhängigkeit von der Vorhersage der Drehzahl ($\Omega(t + h)$) der Wärmekraftmaschine (18); und

wenn eine Drehmomentanforderung ($C_{Anforderung}$), die größer als die Kapazitäten des momentanen Drehmoments der Wärmekraftmaschine (18) ist, durch einen Benutzer ausgeführt wird, dann fortgefahren wird mit:

- einem Schritt zum Vergleichen zwischen einer Zieldrehzahl ($\Omega^*$) der Wärmekraftmaschine (18) und der vorhergesagten Drehzahl ($\Omega(t + h)$);
- solange die vorhergesagte Drehzahl ($\Omega(t + h)$) kleiner als die Zieldrehzahl ($\Omega^*$) ist, mit dem Steuern eines Zieldrehmoments ( $C_{ME}^*$ ) der primären Elektromaschine (10) auf null und mit dem Steuern eines Zieldrehmoments ( $C_{MTh}^*(t)$ ) der Wärmekraftmaschine (18) fortgefahren wird, die dem Maximalwert ( $C_{MThmax}^*$ ) des Drehmoments des Wärmekraftmaschine (18) entspricht; und

- wenn die vorhergesagte Drehzahl ($\Omega(t + h)$) größer als oder gleich der Zieldrehzahl ($\Omega^*$) ist, mit dem

Steuern eines Zieldrehmoments ( $C_{ME}^{*}$ ) der primären Elektromaschine (10) fortgefahren wird, das gleich dem Drehmoment ($C_{\text{Anforderung}}$) ist, das durch den Benutzer angefordert wird, während das Drehmoment der Wärmekraftmaschine (18) durch den Regelungsschritt (33) frei geregelt wird.

**2.** Verfahren nach Anspruch 1, wobei außerdem mit dem Regeln der Gleichstrombusspannung ($U_{DC}$) in Abhängigkeit von einem Zieldrehmoment ( $C_{ME}^{*}(t)$ ) der primären Elektromaschine (10), dem Zieldrehmoment ( $C_{HSG}^{*}(t)$ ) der sekundären Elektromaschine (16) und einem Zielspannungswert ( $U_{Dc}^{*}(t)$ ) fortgefahren wird.

**3.** Verfahren nach Anspruch 1 oder 2, **dadurch gekennzeichnet, dass** der Schritt zum Regeln (33) der Drehzahl $\Omega(t)$ der Wärmekraftmaschine (18) ferner in Abhängigkeit von einem Referenzdrehzahlwert ($\Omega_{ref}(t + h)$) ausgeführt wird.

**4.** Steuerelement eines Hybridantriebsstrangs (1) eines Kraftfahrzeugs, umfassend eine primäre Elektromaschine (10) zum Antreiben des Kraftfahrzeugs, die über einen ersten Wechselrichter (15) an einen Gleichspannungsbus (12) angeschlossen ist, dessen Spannung durch ein passives Dämpfungselement (13) geglättet wird,

der Hybridantriebsstrang (1) umfassend ferner eine sekundäre Elektromaschine (16), die geeignet ist, um die Energie aufzunehmen, die durch eine Wärmekraftmaschine (18) produziert wird, und sie über einen zweiten Wechselrichter (17), der die Spannung des Gleichspannungsbusses (12) regelt, an den Gleichspannungsbus (12) zu übertragen; und eine elektrische Akkumulatorenbatterie (14), die über ein gesteuertes Relais (19) an den Gleichspannungsbus (12) angeschlossen ist, zum Bereitstellen einer Gleichspannung ($V_{DC}$) an den Gleichspannungsbus (12);

das Steuerelement umfassend Mittel zum Implementieren eines vorangehenden Schrittes, im Laufe dessen das Öffnen des gesteuerten Relais (19) gesteuert wird, um die Batterie (14) von dem Gleichspannungsbus (12) zu isolieren; und

das Steuerelement umfassend Mittel zum Implementieren der folgenden Schritte:

- einen Schritt zum Vorhersagen (34) der Drehzahl ($\Omega(t + h)$) der Wärmekraftmaschine (18) nach einer zuvor bestimmten Dauer (h), die der Verzögerung der Reaktion der Wärmekraftmaschine (18) entspricht;
- einen Schritt zum Regeln (33) der Drehzahl $\Omega(t)$ der Wärmekraftmaschine (18) in Abhängigkeit von dem Vorhersagen der Drehzahl ($\Omega(t + h)$) der Wärmekraftmaschine (18);

sodass, wenn eine Drehmomentanforderung ($C_{\text{Anforderung}}$), die größer als die Kapazitäten des momentanen Drehmoments der Wärmekraftmaschine (18) ist, durch einen Benutzer ausgeführt wird, das Steuerelement implementiert:

- einen Schritt zum Vergleichen zwischen einer Zieldrehzahl ($\Omega^*$) der Wärmekraftmaschine (18) und der vorhergesagten Drehzahl ($\Omega(t + h)$);

solange die vorhergesagte Drehzahl ($\Omega(t + h)$) kleiner als die Zieldrehzahl ($\Omega^*$) ist, mit dem Steuern eines Zieldrehmoments ( $C_{ME}^{*}{}'$ ) der primären Elektromaschine (10) auf null und mit dem Steuern eines Zieldrehmoments ( $C_{MTh}^{*}(t)$ ) der Wärmekraftmaschine (18) fortgefahren wird, die dem Maximalwert ( $C_{MThmax}^{*}$ ) des Drehmoments des Wärmekraftmaschine (18) entspricht; und

- wenn die vorhergesagte Drehzahl ($\Omega(t + h)$) größer als oder gleich der Zieldrehzahl ($\Omega^*$) ist, mit dem Steuern eines Zieldrehmoments ( $C_{ME}^{*}$ ) der primären Elektromaschine (10) fortgefahren wird, das gleich dem Drehmoment ($C_{\text{Anforderung}}$) ist, das durch den Benutzer angefordert wird, während das Drehmoment der Wärmekraftmaschine (18) durch den Regelungsschritt (33) frei geregelt wird.

**5.** Kraftfahrzeug, umfassend einen Hybridantriebsstrang (1) eines Kraftfahrzeugs, umfassend eine primäre Elektromaschine (10) zum Antreiben des Kraftfahrzeugs, die über einen ersten Wechselrichter (15) an einen Gleichspannungsbus (12) angeschlossen ist, dessen Spannung durch ein passives Dämpfungselement (13) geglättet wird, der Hybridantriebsstrang (1) umfassend ferner eine sekundäre Elektromaschine (16), die geeignet ist, um die Energie aufzunehmen, die durch einen Wärmemotor (18) produziert wird, und sie über einen zweiten Wechselrichter (17), der die Spannung des Gleichspannungsbusses (12) regelt, an den Gleichspannungsbus (12) zu übertragen; und eine elektrische Akkumulatorenbatterie (14), die über ein gesteuertes Relais (19) an den Gleichspannungsbus (12) angeschlossen ist, zum Bereitstellen einer Gleichspannung (VDC) an den Gleichspannungsbus (12); das Kraftfahrzeug umfassend ein Steuerelement des Antriebsstrangs (1) nach Anspruch 4.

**Claims**

1. Method for controlling a hybrid power train (1) of a motor vehicle, comprising a primary electric machine (10) for driving the motor vehicle, which is connected via a first inverter (15) to a DC voltage bus (12) of which the voltage is smoothed by a passive damping element (13),

   the hybrid power train (1) further comprising a secondary electric machine (16) which is capable of receiving the energy generated by a heat engine (18) and transmitting it to said DC voltage bus (12) via a second inverter (17) regulating the voltage of said DC voltage bus (12); and an electric storage battery (14) which is connected to the DC voltage bus (12) by means of a controlled relay (19), in order to supply a DC voltage ($V_{DC}$) to said DC voltage bus (12); the motor vehicle comprising a control element for the power train (1), suitable for implementing a prior step during which the opening of said controlled relay (19) is controlled so as to isolate the battery (14) from the DC voltage bus (12); and the method being suitable for implementing the following steps:

   - a step (34) of predicting said rotation speed ($\Omega(t + h)$) of the heat engine (18), after a predetermined time (h) corresponding to the delay in response of said heat engine (18);
   - a step (33) of regulating the rotation speed ($\Omega(t)$) of the heat engine (18) on the basis of said prediction of said rotation speed ($\Omega(t + h)$) of the heat engine (18); and

   when a torque request ($C_{demand}$) greater than the instantaneous torque capacity of the heat engine (18) is made by a user, then follows:

   - a step of comparing a target rotation speed ($\Omega^*$) of the heat engine (18) with said predicted rotation speed ($\Omega(t + h)$);
   - as long as said predicted rotation speed ($\Omega(t + h)$) is lower than said target rotation speed ($\Omega^*$), then a target torque ( $C_{ME}^*$ ) of the primary electric machine (10) of zero is set and a target torque ( $C_{MTh}^*(t)$ ) of the heat engine (18) corresponding to the maximum torque value ( $C_{MThmax}^*$ ) of said heat engine (18) is set; and
   - when said predicted rotation speed ($\Omega(t + h)$) is greater than or equal to said target rotation speed ($\Omega^*$), then a target torque ( $C_{ME}^*$ ) of the primary electric machine (10) is set which is equal to the torque requested ($C_{demand}$) by the user, while the torque of the heat engine (18) is freely regulated by said regulation step (33).

2. Method according to claim 1, wherein thereafter the DC bus voltage ($U_{DC}$) is then regulated on the basis of a target torque ( $C_{ME}^*(t)$ ) of the primary electric machine (10), the target torque ( $C_{HSG}^*(t)$ ) of the secondary electric machine (16) and a target voltage value ( $U_{DC}^*(t)$ ).

3. Method according to claim 1 or 2, **characterized in that** said step (33) of regulating the rotation speed $\Omega(t)$ of the heat engine (18) is further performed on the basis of a reference rotation speed value ($\Omega_{ref}(t + h)$).

4. Control element for a hybrid power train (1) of a motor vehicle, comprising a primary electric machine (10) for driving the motor vehicle, which is connected via a first inverter (15) to a DC voltage bus (12) of which the voltage is smoothed by a passive damping element (13),

   the hybrid power train (1) further comprising a secondary electric machine (16) which is capable of receiving the energy generated by a heat engine (18) and transmitting it to said DC voltage bus (12) via a second inverter (17) regulating the voltage of said DC voltage bus (12); and an electric storage battery (14) which is connected to the DC voltage bus (12) by means of a controlled relay (19), in order to supply a DC voltage ($V_{DC}$) to said DC voltage bus (12);

said control element comprising means for implementing a prior step during which the opening of said controlled relay (19) is controlled so as to isolate the battery (14) from the DC voltage bus (12); and

said control element comprising means for implementing the following steps:

- a step (34) of predicting said rotation speed ($\Omega(t + h)$) of the heat engine (18), after a predetermined time (h) corresponding to the delay in response of said heat engine (18);
- a step (33) of regulating the rotation speed $\Omega(t)$ of the heat engine (18) on the basis of said prediction of said rotation speed ($\Omega(t + h)$) of the heat engine (18);

so that when a torque request ($C_{demand}$) greater than the instantaneous torque capacity of the heat engine (18) is made by a user, the control element implements:

- a step of comparing a target rotation speed ($\Omega^*$) of the heat engine (18) with said predicted rotation speed ($\Omega(t + h)$);
- as long as said predicted rotation speed ($\Omega(t + h)$) is lower than said target rotation speed ($\Omega^*$), then a target torque ($C_{ME}^*$) of the primary electric machine (10) of zero is set and a target torque ($C_{MTh}^*(t)$) of the heat engine (18) corresponding to the maximum torque value ($C_{MThmax}^*$) of said heat engine (18) is set; and
- when said predicted rotation speed ($\Omega(t + h)$) is greater than or equal to said target rotation speed ($\Omega^*$), then a target torque ($C_{ME}^*$) of the primary electric machine (10) is set which is equal to the torque requested ($C_{demand}$) by the user, while the torque of the heat engine (18) is freely regulated by said regulation step (33).

5. Motor vehicle comprising a hybrid power train (1) of a motor vehicle, comprising a primary electric machine (10) for driving the motor vehicle, which is connected via a first inverter (15) to a DC voltage bus (12) of which the voltage is smoothed by a passive damping element (13),

the hybrid power train (1) further comprising a secondary electric machine (16) which is capable of receiving the energy generated by a heat engine (18) and transmitting it to said DC voltage bus (12) via a second inverter (17) regulating the voltage of said DC voltage bus (12); and an electric storage battery (14) which is connected to the DC voltage bus (12) via a controlled relay (19), in order to supply a DC voltage (VDC) to said DC voltage bus (12); the motor vehicle comprising a control element for the power train (1) according to claim 4.

**Fig.1a**

**Fig.1b**

# Fig.2

Fig.3

Fig.4

Fig.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3053299
- WO 2013076566 A1
- FR 2783768 A1